(19) Europäisches Patentamt
European Patent Office
Office européen des brevets

(11) **EP 3 605 203 A1**

(12) **EUROPEAN PATENT APPLICATION**
published in accordance with Art. 153(4) EPC

(43) Date of publication:
**05.02.2020 Bulletin 2020/06**

(51) Int Cl.:
*G02C 7/10* [(2006.01)]   *G02B 1/115* [(2015.01)]
*G02C 7/02* [(2006.01)]

(21) Application number: **18777317.1**

(22) Date of filing: **30.03.2018**

(86) International application number:
**PCT/JP2018/013650**

(87) International publication number:
**WO 2018/181911 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2017   JP 2017069876**

(71) Applicant: **Hoya Lens Thailand Ltd.
Pathumthani 12130 (TH)**

(72) Inventors:
• **ADACHI, Makoto
Tokyo 160-8347 (JP)**
• **KAMURA, Hitoshi
Tokyo 160-8347 (JP)**
• **MIYAJIMA, Shinya
Tokyo 160-8347 (JP)**

(74) Representative: **Hoffmann Eitle
Patent- und Rechtsanwälte PartmbB
Arabellastraße 30
81925 München (DE)**

(54) **SPECTACLE LENS**

(57)    Provided is a spectacle lens including: a lens substrate containing an ultraviolet absorber; and an antireflective film formed on at least one of a convex surface of the lens substrate and a concave surface facing the convex surface, in which the lens substrate is dyed with a yellow dye.

*FIG. 3*

TRANSMISSION SPECTRUM (ENLARGED)

**Description**

Technical Field

The present disclosure relates to a spectacle lens.

Background Art

Light incident on the eye includes light of various wavelengths. It is known that light of a short wavelength imposes a heavy burden on the eye (see, for example, Patent Literature 1).

Citation List

Patent Literature

Patent Literature 1: JP 2013-8052 A

Summary of Invention

Technical Problem

By reducing the amount of light of a short wavelength (wavelength of 400 to 500 nm) which is so-called blue light incident on the eye, glare can be reduced.
The present disclosure provides a spectacle lens capable of reducing glare caused by blue light.

Solution to Problem

A spectacle lens according an aspect includes: a lens substrate containing an ultraviolet absorber; and an antireflective film formed on at least one of a convex surface of the lens substrate and a concave surface facing the convex surface, in which the lens substrate is dyed with a yellow dye.

Advantageous Effects of Invention

According to one aspect and various embodiments of the present disclosure, it is possible to provide a spectacle lens capable of reducing glare caused by blue light to the eye.

Brief Description of Drawings

Fig. 1 is a reflection spectrum in a wavelength range of 380 to 780 nm on a concave surface of a spectacle lens of each of Examples 1 and 3.
Fig. 2 is a reflection spectrum in a wavelength range of 380 to 780 nm on a concave surface of a spectacle lens of Example 5.
Fig. 3 is a transmission spectrum in a wavelength range of 380 to 780 nm of a spectacle lens of each of Examples and Comparative Examples.
Fig. 4 illustrates a transmission spectrum in a wavelength range of 380 to 680 nm of a spectacle lens of each of Examples and Comparative Examples at a transmittance of 70% to 100%. The lower stage of Fig. 4 illustrates an emission spectrum of a white LED.

Description of Embodiments

Hereinafter, one aspect and an embodiment of the present disclosure will be described in detail with reference to the drawings.

[Lens substrate]

A lens substrate included in a spectacle lens of the present disclosure can be made of a material generally used for a lens substrate of a spectacle lens, for example, a plastic such as polyurethane, polythiourethane, polycarbonate, or diethylene glycol bisallyl carbonate, or inorganic glass, and is not particularly limited. The thickness and the diameter of the lens substrate are not particularly limited. However, usually, the thickness is about 1 to 30 mm, and the diameter is about 50 to 100 mm. When the spectacle lens of the present disclosure is a spectacle lens for correcting visual acuity, the lens substrate can have a refractive index nd of about 1.5 to 1.8. The lens substrate can be formed, for example, by forming a lens molding die using a convex mold and a concave mold, injecting a monomer into the molding die, and performing casting polymerization.

[Ultraviolet absorber]

In general, an ultraviolet absorber used for a spectacle lens mainly absorbs light in an ultraviolet wavelength range (generally 380 nm or less). The wavelength of light absorbed by the ultraviolet absorber is not limited to 380 nm or less, and may extend to 430 nm of blue light wavelength. In general, a benzotriazole-based material is known as an ultraviolet absorber. Examples of the benzotriazole-based ultraviolet absorber include the following.
2-(3-tert-butyl-2-hydroxy-5-methylphenyl)-5-chloro-2H-benzotriazole,
2-(3-tert-butyl-2-hydroxy-5-ethylphenyl)-5-chloro-2H-benzotriazole,
5-chloro-2-(3,5-dimethyl-2-hydroxyphenyl)-2H-benzotriazole,    5-chloro-2-(3,5-diethyl-2-hydroxyphenyl)-2H-benzotriazole,
5-chloro-2-(2-hydroxy-4-methoxyphenyl)-2H-benzotriazole, 5-chloro-2-(4-ethoxy-2-hydroxyphenyl)-2H-benzotriazole,
2-(4-butoxy-2-hydroxyphenyl)-5-chloro-2H-benzotriazole, and
5-chloro-2-(2-hydroxy-4-octyloxyphenyl)-2H-benzotriazole.

[Dyeing]

The lens substrate included in the spectacle lens of the present disclosure is dyed with a yellow dye. A dyeing treatment can be performed using a yellow dye for the lens substrate on which an antireflective film has not been formed yet. In the dyeing treatment, various dyes such as a cationic dye, an anionic dye, and a disperse dye used in an immersion dyeing method and a sublimation dyeing method can be used. The dyeing treatment is usually performed by immersing the lens substrate in a dyeing bath containing a dye. Also in the present disclosure, the dyeing treatment can be performed by immersing the lens substrate in the dyeing bath as in a usual dyeing treatment. For the dyeing bath, for example, a product obtained by diluting a commercially available dye with water, an alcohol, or a mixed solvent thereof can be used. A dye concentration in the dyeing bath is, for example, 0.01 to 10 g/L, and the temperature of the dyeing bath is, for example, in a range of 0 to 100°C. Furthermore, a known additive such as surfactant can also be added to the dyeing bath as needed. Immersion time of the lens substrate in the dyeing bath is not particularly limited, and is, for example, about 30 seconds to one hour. Note that here, the yellow dye means a dye that absorbs light in a wavelength range of 420 to 500 nm.
The dyeing density (%) is a numerical value indicating the density of a lens color and is determined by the following formula.

$$\text{Dyeing density (\%) = 100 (\%)-(visible light transmittance at a specific wavelength (\%))}$$

In the disclosure here, the specific wavelength is 435 nm.
By dyeing with a yellow dye, it is possible to mainly remove blue light in a wavelength range of 420 to 500 nm, and to suppress glare. However, in order to increase a blue light cut ratio only by dyeing with a yellowish dye, the dyeing density is increased. As a result, Yellowness Index (YI value) is increased. A large YI value is not preferable in view of the appearance of the spectacle lens. Furthermore, only by dyeing, the wavelength range to be removed is broadened, and therefore it is difficult to selectively remove the wavelength range of blue light. In this case, light other than blue light is also removed, and a color balance of the spectacle lens is deteriorated. Furthermore, a bluing agent for suppressing yellow may be added in order to adjust the color balance of the spectacle lens. However, the transmittance of the spectacle lens tends to decrease by addition of the bluing agent.
According to the spectacle lens of the present disclosure, it is possible to remove blue light on a low wavelength side (for example, a wavelength of about 420 nm or less) by an ultraviolet absorber (preferably, an ultraviolet absorber capable of absorbing also blue light on a low wavelength side), and to remove blue light on a long wavelength side of about 420 nm or more mainly by dyeing with a yellow dye. This makes it possible to remove blue light while suppressing the YI value to a low value. Furthermore, the transmittance can be kept high, and the appearance can be made good.

[Antireflective film]

The spectacle lens may have an antireflective film directly on the lens substrate, or may have an antireflective film indirectly via a single or two or more functional films. The antireflective film can include two or more layers, and the two or more layers can be vapor deposition layers. For example, the antireflective film can be a multilayer vapor deposition layer in which high refractive index material layers and low refractive index material layers are alternately laminated.

As the high refractive index material, at least one metal oxide selected from the group consisting of $TiO_2$, $Al_2O_3$, $Y_2O_3$, $HfO_2$, and $Nb_2O_5$ can be used. As the low refractive index material, $MgF_2$ or the like can be used in addition to $SiO_2$. Examples of the antireflective film including a plurality of layers (preferably vapor deposition layers) formed on the lens substrate include an antireflective film including a layer containing $SiO_2$ as a main component (first layer), a layer containing $Ta_2O_5$ or $ZrO_2$ as a main component (second layer), a layer containing $SiO_2$ as a main component (third layer), a layer containing $Ta_2O_5$ or $ZrO_2$ as a main component (fourth layer), a layer containing $SiO_2$ as a main component (fifth layer), a layer containing $Ta_2O_5$ or $ZrO_2$ as a main component (sixth layer), and a layer containing $SiO_2$ as a main component (seventh layer) in this order from the lens substrate side, and the film thickness of each of the layers only needs to be determined so as to achieve a desired reflection characteristic. In the present disclosure, the main component is a component occupying the most in a layer or a vapor deposition source, and is usually a component occupying 50% by mass to 100% by mass or 90% by mass to 100% by mass of the whole. If the vapor deposition source contains 50% by mass or more of $SiO_2$, a vapor deposition layer formed by using this vapor deposition source can function as a low refractive index layer. If the vapor deposition source contains 50% by mass or more of $Ta_2O_5$ or $ZrO_2$, a vapor deposition layer formed by using this vapor deposition source can function as a high refractive index layer. Note that the vapor deposition source may contain trace amounts of impurities that are inevitably mixed in, and may contain another component such as another inorganic substance or a known additive component that assists vapor deposition within a range in which a function of the main component is not impaired.

The spectacle lens of the present disclosure has an antireflective film on at least one or both of a convex surface of the lens substrate and a concave surface facing the convex surface. On one surface, an antireflective film having a reflection characteristic (for example, a reflectance of about 3 to 8% in a wavelength range of 420 to 500 nm) with respect to blue light may be formed. This makes it possible to reduce blue light also by reflection, and to further reduce glare.

The antireflective film can be formed on the lens substrate by performing vapor deposition sequentially using a vapor deposition source of a high refractive index material or a low refractive index material. The vapor deposition can be performed by a vacuum vapor deposition method, an ion plating method, a plasma chemical vapor deposition (CVD) method, an ion assist method, a reactive sputtering method, or the like. In order to obtain high hardness and good adhesion, a film may be formed by the ion assist method. In the film formation by the ion assist method, an acceleration voltage can be about 50 to 700 (V), and an acceleration current can be about 30 to 250 (mA). Examples of an assist gas (ionized gas) used in the ion assist method include oxygen, nitrogen, and a mixed gas thereof.

The antireflective film may further contain a single or two or more vapor deposition layers (hereinafter also referred to as "conductive oxide layers") formed by vapor deposition using a vapor deposition source containing a conductive oxide as a main component in order to prevent adhesion of dust or dirt due to the charged spectacle lens. By disposing such a conductive oxide layer, a surface of the spectacle lens on a side of the antireflective film can have a surface resistance value of, for example, about $5 \times 10^9$ to $9 \times 10^{10}$ $\Omega/\square$ (sheet resistance) . This makes it possible to suppress adhesion of dust or dirt to a surface of the spectacle lens effectively. As the conductive oxide, a transparent conductive oxide is preferably used in order to prevent reduction in transparency. Examples of the transparent conductive oxide include indium oxide, tin oxide, zinc oxide, and a composite oxide thereof. Indium-tin oxide (ITO) can be used from a viewpoint of transparency to visible light and conductivity. If the thickness of the conductive oxide layer is about 3 to 10 nm, reflection performance of the antireflective film and transparency of the spectacle lens can be kept good. For example, in the antireflective film in which the first layer to the seventh layer are laminated in the order described above, a conductive oxide layer containing ITO as a main component and having a film thickness of 3 to 10 nm may be formed between the sixth layer and the seventh layer as in the layer configuration illustrated in Table 1 below.

[Functional film]

The spectacle lens of the present disclosure may have a functional film such as a hard coat layer or a water repellent layer on a surface of the antireflective film described above. Furthermore, the spectacle lens of the present disclosure may have a functional film between the lens substrate and the antireflective film. The functional film that can be present between the lens substrate and the antireflective film is not particularly limited. Examples thereof include a hard coat layer for improving durability/scratch resistance of the lens and a primer layer (adhesive layer) for improving adhesion (adhesive layer). The film thickness of the functional film optionally formed in this manner is not particularly limited as long as being set in a range in which the function described above can be exhibited. Note that a lens substrate with a hard coat layer is also commercially available in order to prevent generation of scratches during storage or distribution. Such a lens substrate may be used in order to obtain the spectacle lenses of the present disclosure.

The spectacle lens preferably has a high transmittance in order to give a wearer of the spectacles a good view. The antireflective film formed on the spectacle lens can have high transparency, and this can suppress a reduction in transparency of the spectacle lens.

Although not particularly limited, a low reflectance antireflective film may be formed on at least one of the convex surface and the concave surface of the lens substrate. This can reduce a ghost generated by multiple reflections of light in the lens substrate. Furthermore, if low reflectance antireflective films are formed on both the surfaces, a ghost can be reduced more effectively. In one aspect, in the lens substrate and the spectacle lens, an object side surface can be a convex surface, and an eyeball side surface can be a concave surface. Here, the "object side surface" is a surface located on an object side when spectacles including the spectacle lens are worn by a wearer, and the "eyeball side surface" is the opposite surface thereto, that is, a surface located on an eyeball side when spectacles including the spectacle lens are worn by a wearer. In one aspect, at least one of the object side surface and the eyeball side surface of the spectacle lens can have a luminous reflectance described later.

[Luminous transmittance]

A luminous transmittance is measured in accordance with JIS T 7333:2005. The spectacle lens according to one aspect of the present disclosure can have a high luminous transmittance, for example, a luminous transmittance of 90% or more or 95% or more, for example, in a range of 95 to 98%. Note that a lens for night driving needs to have a luminous transmittance of 75% or more (ISO 8980-3 (2008)).

[Blue light cut ratio (cut ratio according to formulas 1 and 2)]

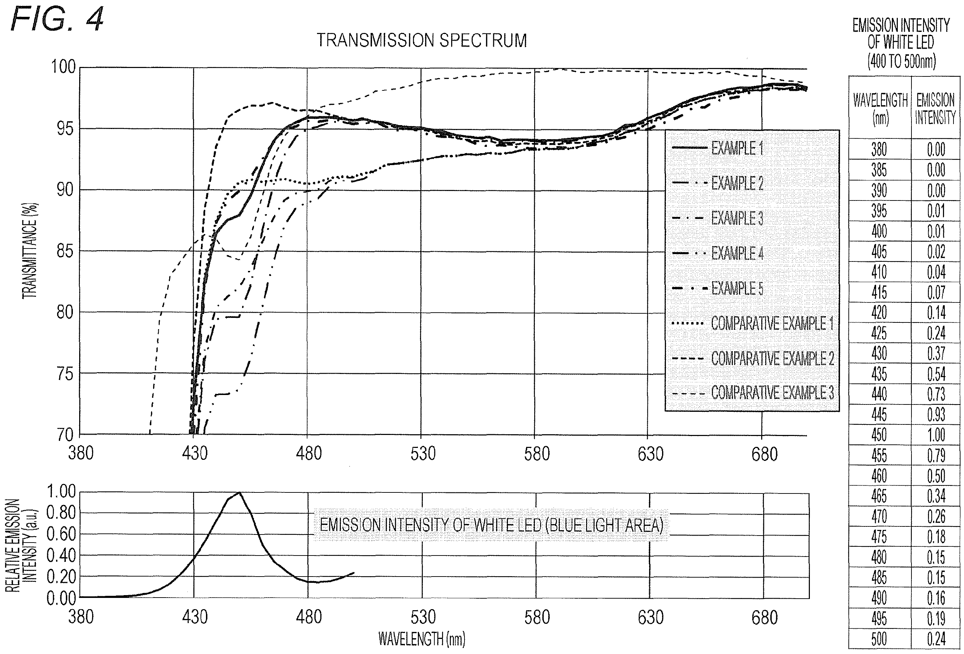

A blue light cut ratio (%) is calculated by the following formulas 1 and 2 using a white LED (manufactured by Nichia Corporation) as a light source. Fig. 4 illustrates an emission spectrum of the white LED. This emission spectrum has a large peak intensity in a blue wavelength range (around 440 nm) unlike natural light.

(Formula 1)

$$T\ (\%) = \frac{\int_{380nm}^{500nm} \tau(\lambda)I\ (\lambda)d\lambda}{\int_{380nm}^{500nm} I(\lambda)d\lambda}$$

(Formula 2)

"Blue light cut ratio" = 100 - T (%)

(wherein $\lambda$ represents the wavelength of a white LED light, and $\tau(\lambda)$ represents a transmittance at the wavelength $\lambda$. $I(\lambda)$ represents an intensity at the wavelength $\lambda$.)

In the spectacle lens of the present disclosure, a blue light cut ratio calculated from the above formulas 1 and 2 can be more than 15% and 25% or less. This makes it possible to reduce the intensity of blue light effectively.

[Luminous reflectance]

A luminous reflectance is measured in accordance with JIS T 7334:2011. In the spectacle lens of the present disclosure, the luminous reflectance of at least one of the object side surface and the eyeball side surface of the spectacle lens can be 2.5% or less or less than 2.5%. For example, when the luminous reflectance of the eyeball side surface is 2.5% or less, it is possible to suppress glare caused by light coming from the back of a wearer of the spectacles and reflected on the eyeball side surface. The luminous reflectance of one or both surfaces of the spectacle lens may be 1% or less or 0.5% or less. When the luminous reflectance is small, the glare can be effectively reduced.

[Yellowness Index (YI value)]

The YI value is a numerical value calculated in accordance with JIS K 7373:2006. In order to keep the appearance of the spectacle lens good, the YI value is preferably lower. For example, the YI value may be 11% or less as a spectacle lens suitable not only for night driving but also for regular use.

As described above, according to the present disclosure, it is possible to provide a spectacle lens capable of reducing glare caused by blue light. Moreover, it is also possible to provide a spectacle lens having a good appearance.

[Examples]

Hereinafter, the present disclosure will be further described with Examples, but the present disclosure is not limited to the forms indicated by Examples.

[Example 1]

(1) Formation of lens substrate

To 50.28 parts by mass of bis(isocyanato methyl) bicyclo[2.2.1]heptane as a lens raw material monomer, 0.06 parts by mass of dimethyltin dichloride as a catalyst, 0.15 parts by mass of acid phosphate JP-506H (manufactured by Johoku Chemical Industry Co., Ltd.) as a release agent, and 1.00 part by mass of 2-(3-tert-butyl-2-hydroxy-5-methylphenyl)-5-chloro-2H-benzotriazole as an ultraviolet absorber were added, and the resulting mixture was stirred and mixed. Thereafter, 25.50 parts by mass of pentaerythritol tetrakis(3-mercaptopropionate) and 24.22 parts by mass of 1,2-bis(2-mercaptoethylthio)-3-mercaptopropane as lens raw materials were further added, and the resulting mixture was stirred and mixed for 30 minutes under a reduced pressure of 10 mmHg to prepare a lens monomer composition. Subsequently, this lens monomer composition was poured into a lens molding die (set to 0.00D and a thickness of 1.6 mm) including a glass mold and a resin gasket prepared in advance, and polymerization was performed from 20°C to 120°C in an electric furnace for 24 hours. After completion of the polymerization, the gasket and the mold were removed. Thereafter, a heat treatment was performed at 120°C for two hours to obtain a transparent plastic lens (lens substrate (refractive index: 1.6)) in which one surface was convex surface and the other surface was concave surface.

(2) Dyeing treatment

One liter of pure water in a liquid tank was kept at 95°C. To the liquid tank, 40 cc of NICCA SUNSOLT 7000 (manufactured by NICCA Chemical Co., Ltd.) as a dispersing agent and 5.0 g of FSP Yellow-PE (manufactured by Futaba Sangyo Co., Ltd.) as a dispersing dye (yellow dye) were added to prepare a dyeing bath. The lens substrate was immersed in the prepared dyeing bath for 90 seconds to subject the lens substrate to a dyeing treatment.

(3) Formation of hard coat layer and antireflective film

Thereafter, hard coat layers were formed on the entire surfaces of both the convex surface and the concave surface of the dyed lens substrate using a hard coat solution for a spectacle lens having a refractive index of 1.6. A total of eight vapor deposition layers illustrated in Table 1 were sequentially formed on the convex surface side and the concave surface side of the hard coat layer using an oxygen gas and a nitrogen gas as assist gases, respectively. Note that in the present Example and Examples and Comparative Examples described below, except for impurities that may be inevitably mixed in, vapor deposition sources including oxides described in Tables were used.

[Table 1]

Table 1 Examples 1 and 2 and Comparative Examples 2 and 3 (refractive index of lens substrate: 1.6)

| Layer | Material | Optical film thickness | Refractive index | Physical film thickness (nm) |
|---|---|---|---|---|
| First layer | SiO$_2$ | 0.099 | 1.469 | 33.7 |
| Second layer | ZrO$_2$ | 0.026 | 2.097 | 6.2 |
| Third layer | SiO$_2$ | 1.067 | 1.469 | 363.2 |
| Fourth layer | ZrO$_2$ | 0.051 | 2.097 | 12.2 |
| Fifth layer | SiO$_2$ | 0.085 | 1.469 | 28.9 |

(continued)

| Layer | Material | Optical film thickness | Refractive index | Physical film thickness (nm) |
|---|---|---|---|---|
| Sixth layer | $ZrO_2$ | 0.439 | 2.097 | 104.7 |
| Seventh layer | ITO | 0.021 | 2.1 | 5.0 |
| Eighth layer | $SiO_2$ | 0.315 | 1.469 | 107.2 |

[Example 2]

A spectacle lens was obtained through the same steps as in Example 1 except that the immersion time of the lens substrate in the dyeing bath in the dyeing treatment was 120 seconds.

[Example 3]

A spectacle lens was obtained through the same steps as in Example 1 except that a similar antireflective film to that in Examples 1 and 2 was formed on the convex surface (object side surface) of the lens substrate, and the antireflective film illustrated in Table 2 was formed on the concave surface (eyeball side surface).

[Table 2]

Table 2 Examples 3 and 4 and Comparative Example 1 (refractive index of lens substrate: 1.6)

| Layer | Material | Optical film thickness | Refractive index | Physical film thickness (nm) |
|---|---|---|---|---|
| First layer | $SiO_2$ | 0.087 | 1.469 | 29.6 |
| Second layer | $ZrO_2$ | 0.036 | 2.097 | 8.5 |
| Third layer | $SiO_2$ | 1.131 | 1.469 | 384.7 |
| Fourth layer | $ZrO_2$ | 0.067 | 2.097 | 16 |
| Fifth layer | $SiO_2$ | 0.107 | 1.469 | 36.3 |
| Sixth layer | $ZrO_2$ | 0.187 | 2.097 | 44.4 |
| Seventh layer | ITO | 0.021 | 2.1 | 5 |
| Eighth layer | $SiO_2$ | 0.329 | 1.469 | 111.9 |

[Example 4]

A spectacle lens was obtained through the same steps as in Example 3 except that the dyeing treatment was performed under the same conditions as the dyeing conditions in Example 2.

[Example 5]

(1) Formation of lens substrate

To 50.6 parts by mass of 1,3-bis(isocyanato methyl) benzene as a lens raw material monomer, 0.001 parts by mass of dimethyltin dichloride as a catalyst, 0.14 parts by mass of acid phosphate JP-506H (manufactured by Johoku Chemical Industry Co., Ltd.) as a release agent, and 0.55 parts by mass of 2-(3-tert-butyl-2-hydroxy-5-methylphenyl)-5-chloro-2H-benzotriazole as an ultraviolet absorber were added, and the resulting mixture was stirred and mixed. Thereafter, 49.4 parts by mass of bis(mercaptomethyl) 3,6,9 trithia-1,11-undecanedithiol as a lens raw material was further added, and the resulting mixture was stirred and mixed for 30 minutes under a reduced pressure of 10 mmHg to prepare a lens monomer composition. Subsequently, this lens monomer composition was poured into a lens molding die (set to 0.00D and a thickness of 1.6 mm) including a glass mold and a resin gasket prepared in advance, and polymerization was performed from 20°C to 120°C in an electric furnace for 24 hours. After completion of the polymerization, the gasket and the mold were removed. Thereafter, a heat treatment was performed at 120°C for two hours to obtain a transparent plastic lens (lens substrate (refractive index: 1.67)) in which one surface was convex surface and the other surface was concave surface.

(2) Dyeing treatment

One liter of pure water in a liquid tank was kept at 95°C. To the liquid tank, 40 cc of NICCA SUNSOLT 7000 (manufactured by NICCA Chemical Co., Ltd.) as a dispersing agent and 5.0 g of FSP Yellow-PE (manufactured by Futaba Sangyo Co., Ltd.) as a dispersing dye (yellow dye) were added to prepare a dyeing bath. The lens substrate was immersed in the prepared dyeing bath for 120 seconds to subject the lens substrate to a dyeing treatment.

(3) Formation of hard coat layer and antireflective film

After the dyeing treatment, hard coat layers were formed on the entire surfaces of both the convex surface and the concave surface of the dyed lens substrate using a hard coat solution for a spectacle lens having a refractive index of 1.67. A total of eight vapor deposition layers illustrated in Table 3 were sequentially formed on the convex surface side and the concave surface side of the hard coat layer using an oxygen gas and a nitrogen gas as assist gases, respectively.

[Table 3]

Table 3 Example 5 (refractive index of lens substrate: 1.67)

| Layer | Material | Optical film thickness | Refractive index | Physical film thickness (nm) |
|---|---|---|---|---|
| First layer | $SiO_2$ | 0.101 | 1.475 | 34.2 |
| Second layer | $ZrO_2$ | 0.0342 | 2.122 | 8.1 |
| Third layer | $SiO_2$ | 1.0752 | 1.475 | 364.5 |
| Fourth layer | $ZrO_2$ | 0.0522 | 2.122 | 12.3 |
| Fifth layer | $SiO_2$ | 0.0808 | 1.475 | 27.4 |
| Sixth layer | $ZrO_2$ | 0.4269 | 2.122 | 100.6 |
| Seventh layer | ITO | 0.0214 | 2.154 | 5.0 |
| Eighth layer | $SiO_2$ | 0.244 | 1.471 | 82.9 |

[Comparative Example 1]

A spectacle lens was obtained through the same steps as in Examples 3 and 4 except that the dyeing treatment was not performed.

[Comparative Example 2]

A spectacle lens was obtained through the same steps as in Examples 1 and 2 except that the dyeing treatment was not performed.

[Comparative Example 3]

As a lens substrate, a plastic lens substrate containing no ultraviolet absorber (product name: Eyas manufactured by HOYA Corporation (refractive index: 1.6, colorless lens)) was subjected to only a dyeing treatment under the same conditions as in Example 2, and a spectacle lens was obtained without forming a hard coat layer or an antireflective film.

The manufactured spectacle lens was evaluated by the following method.

(1) Measurement of reflection spectrum

Reflection spectra in a wavelength range of 380 nm to 780 nm were measured for the concave surfaces (eyeball side surfaces) of the spectacle lenses of Examples 1 to 5 and Comparative Examples 1 to 3 using a Hitachi spectrophotometer U-4100.

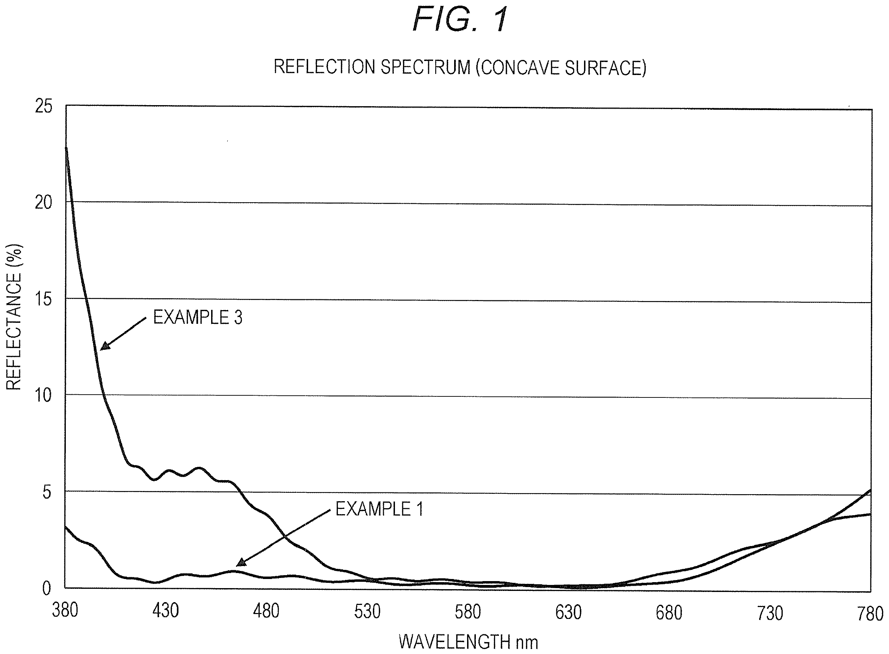

Fig. 1 illustrates the reflection spectra obtained for the spectacle lenses manufactured in Examples 1 and 3. Here, the antireflective film formed on the concave surface side of each of the spectacle lenses of Example 2 and Comparative Examples 2 and 3 are the same as that of Example 1. Therefore, the reflection spectrum in a wavelength range of 380 nm to 780 nm measured for the concave surface exhibited a similar behavior to the reflection spectrum of Example 1.

Furthermore, the antireflective film formed on the concave surface side of each of the spectacle lenses of Example 4 and Comparative Example 1 is the same as that of Example 3. Therefore, the reflection spectrum in a wavelength range of 380 nm to 780 nm measured for the concave surface exhibited a similar behavior to the reflection spectrum of Example 3.

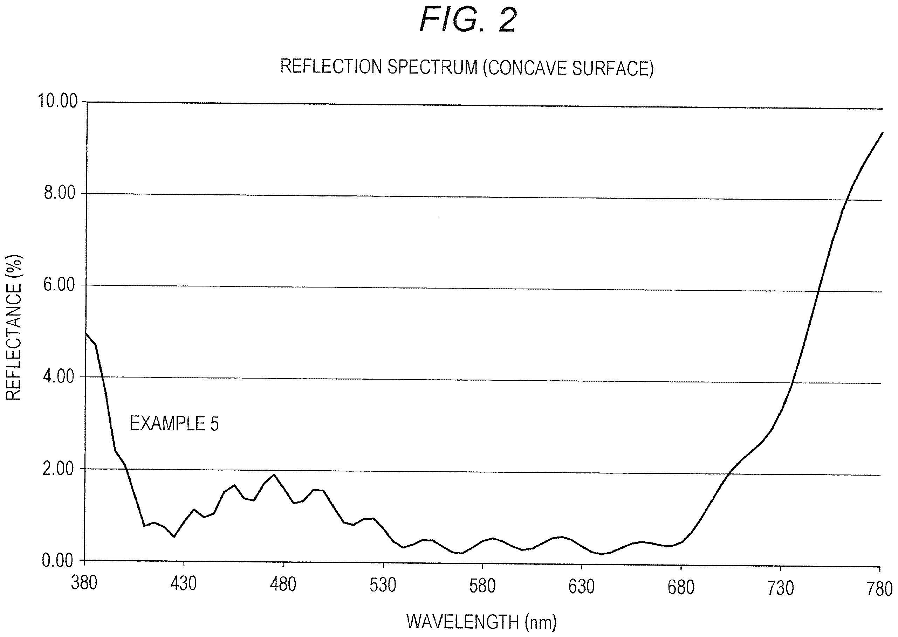

Fig. 2 illustrates the reflection spectrum obtained for the spectacle lens of Example 5.

On the concave surface, the reflectance in a blue wavelength range of the spectacle lens of each of Examples 3 and 4 is larger than that of each of the spectacle lenses of Examples 1 and 2.

(2) Luminous reflectance

The luminous reflectance of each of the concave surfaces (eyeball side surfaces) and the convex surfaces (object side surfaces) of the spectacle lenses of Examples 1 and 2 and Comparative Examples 2 and 3 was 0.9%.

The luminous reflectance of each of the concave surfaces (eyeball side surfaces) of the spectacle lenses of Examples 3 and 4 and Comparative Example 1 was 2.2%, and the luminous reflectance of each of the convex surfaces (object surfaces) thereof was 0.9%.

The luminous reflectance of each of the concave surface (eyeball side surface) and the convex surface (object side surface) of the spectacle lens of Example 5 was 0.9%.

The above luminous reflectance values of the concave surfaces correspond to results of concave surface reflection described below.

(3) Concave surface reflection

The concave surface reflection described in Table 6 indicates glare (glittering) caused by light incident on and reflected by the concave surface of the lens. A lens for which glare (glittering) caused by reflected light was not felt or slightly felt was evaluated as A, and the other lenses were evaluated as B. Sensory evaluation was performed based on such evaluation criteria.

During night driving, glare due to light of a headlight of a car is felt. Strong blue light emitted from an LED illumination used in the headlight increases the glare. When the reflectance of the concave surface is large, light of a headlight of a following passenger car is reflected by the concave surface, particularly, for example, during night driving, and glare is felt. In order to reduce glare caused by reflection, a smaller reflectance is preferable. It is preferable to use an antireflective film having a low reflectance concave surface as in Examples 1, 2, and 5 from this viewpoint.

The antireflective film illustrated in each of Tables 4 and 5 has a configuration in which ITO for static elimination is removed from the layer configuration described in Table 1. Moreover, the antireflective film illustrated in Table 4 has a configuration in which the high refractive index layer is replaced with $Nb_2O_5$, but has a similar effect to the antireflective film described in Table 1.

[Table 4]

| Layer | Material | Optical film thickness | Refractive index | Physical film thickness (nm) |
|---|---|---|---|---|
| First layer | $SiO_2$ | 0.5569 | 1.471 | 189.3 |
| Second layer | $Nb_2O_5$ | 0.0454 | 2.26 | 10.0 |
| Third layer | $SiO_2$ | 0.0575 | 1.471 | 19.5 |
| Fourth layer | $Nb_2O_5$ | 0.1154 | 2.26 | 25.5 |
| Fifth layer | $SiO_2$ | 0.0578 | 1.471 | 19.6 |
| Sixth layer | $Nb_2O_5$ | 0.1864 | 2.26 | 41.2 |

(continued)

| Layer | Material | Optical film thickness | Refractive index | Physical film thickness (nm) |
|---|---|---|---|---|
| Seventh layer | $SiO_2$ | 0.2857 | 1.471 | 97.1 |

[Table 5]

| Layer | Material | Optical film thickness | Refractive index | Physical film thickness (nm) |
|---|---|---|---|---|
| First layer | $SiO_2$ | 0.0852 | 1.456 | 29.3 |
| Second layer | $ZrO_2$ | 0.0421 | 2.017 | 10.4 |
| Third layer | $SiO_2$ | 0.6457 | 1.456 | 221.7 |
| Fourth layer | $ZrO_2$ | 0.098 | 2.017 | 24.3 |
| Fifth layer | $SiO_2$ | 0.0465 | 1.456 | 16.0 |
| Sixth layer | $ZrO_2$ | 0.3698 | 2.017 | 91.7 |
| Seventh layer | $SiO_2$ | 0.2575 | 1.456 | 88.4 |

(4) Transmittance

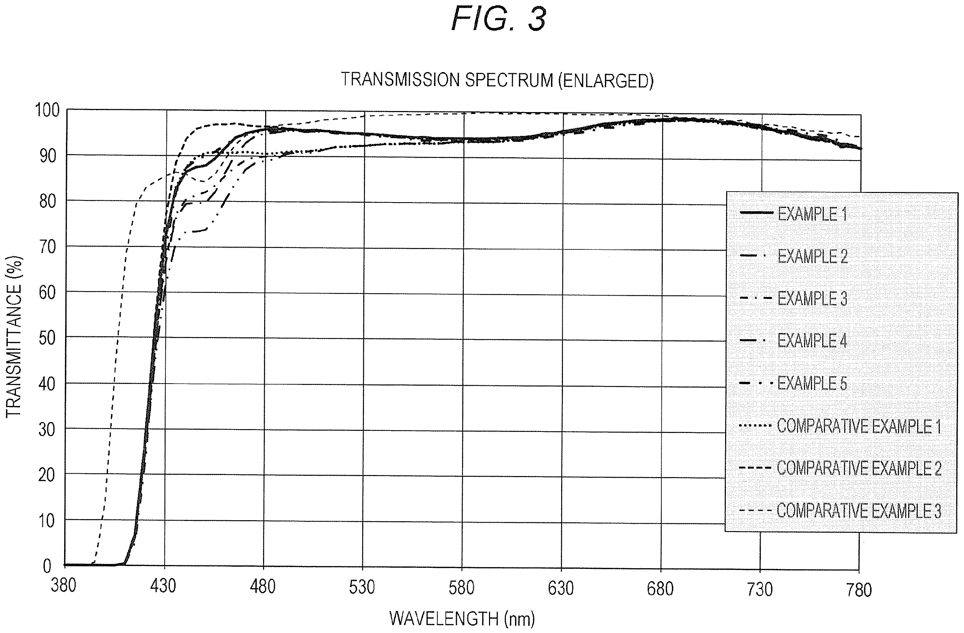

Transmission spectra in a wavelength range of 380 nm to 780 nm were measured for the spectacle lenses of Examples 1 to 5 and Comparative Examples 1 to 3 using a Hitachi spectrophotometer U-4100. Fig. 3 illustrates the measured transmission spectra.

In the transmission spectra illustrated in Fig. 3, the slope of the transmittance with respect to the wavelength decreases around wavelengths of 420 to 450 nm in all the Examples. The spectacle lenses of Examples 1 to 5 each containing both a yellow dye and an ultraviolet absorber in the lens substrate have absorption at a wavelength of 420 to 450 nm. If Examples 1 and 3 having the same dyeing density are compared with each other, the spectacle lens of Example 3 has an antireflective film having a characteristic of strongly reflecting blue light on the concave surface side, and therefore the transmittance thereof is largely smaller than that of the spectacle lens of Example 1. The same applies to a case where Examples 2 and 4 are compared with each other.

(5) Luminous transmittance

The luminous reflectance values measured for the spectacle lenses of Examples 1 to 5 and Comparative Examples 1 to 3 are illustrated in Table 6. Each of the spectacle lenses of Examples 1 to 5 and Comparative Examples 1 to 3 has a high luminous transmittance of 90% or more.

(6) Blue light cut ratio (cut ratio according to formulas 1 and 2)

Table 6 illustrates blue light cut ratios (cut ratios according to formulas 1 and 2) obtained for the spectacle lenses of Examples 1 to 5 and Comparative Examples 1 to 3. Each of the spectacle lenses of Examples 1 to 5 had a blue light cut ratio of more than 15%.

Meanwhile, each of the spectacle lenses of Comparative Examples 1 to 3 had a blue light cut ratio of 10.4% to 12.7%.

Each of the spectacle lenses of Examples 2 and 4 having a dyeing density ("yellow dyeing" in Table 6) of 29% had a blue light cut ratio of more than 21%.

(7) Yellowness Index (YI value)

The YI values of the spectacle lenses of Examples 1 to 5 and Comparative Examples 1 to 3 were calculated. Table 6 illustrates the calculated YI values.

The YI value of a spectacle lens of Comparative Example not containing at least one of a yellow dye and an ultraviolet absorber is relatively small.

The YI value of each of the spectacle lenses of Examples 1, 2, and 5 in which an antireflective film having a low reflectance is formed is relatively small.

The YI value of each of the spectacle lenses of Examples 3 and 4 in which an antireflective film having a large reflectance in a wavelength range of blue light is formed is relatively large.

According to the relationship between the blue light cut ratio and the YI value described above, in Examples 1 and 5, the YI value is as low as about 10%, but the blue light cut ratio is more than 15%, and a high blue light cut ratio can be achieved while suppressing the YI value.

A cut ratio (EN) according to the following formula 3 is a cut ratio $\tau_b$ (%) in consideration of a weighted transmittance of blue light harmful to the eye according to the standard of the Japan Medical Optical Equipment Industries Association. Table 6 illustrates cut ratios according to formula 3 of the spectacle lenses of Examples 1 to 5 and Comparative Examples 1 to 3.

$$(\text{Formula } 3)$$

$$\tau_b = \frac{\int_{380nm}^{500nm} \tau(\lambda) \cdot WB(\lambda) \cdot d\lambda}{\int_{380nm}^{500nm} WB(\lambda) \cdot d\lambda}, \quad WB(\lambda) = E_{S\lambda}(\lambda) \cdot B(\lambda)$$

(wherein $WB(\lambda)$ represents a weighting function, and $\tau(\lambda)$ represents a transmittance at a wavelength $\lambda$ nm. $E_{S\lambda}(\lambda)$ represents spectral irradiance of sunlight, and $B(\lambda)$ represents a blue light hazard function. $E_{S\lambda}(\lambda)$, $B(\lambda)$, and $WB(\lambda)$ are described in JIS T 7333 Annex C.)

The cut ratio according to BS2724 is a cut ratio calculated in accordance with BS 2724 (British Standard). Table 6 illustrates cut ratios according to BS2724 in Examples 1 to 5 and Comparative Examples 1 to 3.

(8) Ghost evaluation

The spectacle lenses of Examples 1 to 5 and Comparative Examples 1 to 3 were placed in a dark room and observed from the eyeball side at a position of 30 cm below a fluorescent lamp. Sensory evaluation was performed based on the following criteria for presence or absence and the degree of generation of a ghost (double image).

Evaluation A: A thin ghost is observed or not observed. Evaluation B: A ghost is observed.

In each of Examples 1 and 2, the concave surface had an average reflectance of 0.64% in a wavelength range of 400 to 500 nm. In Example 5, the average reflectance was 0.62%. In each of Examples 3 and 4, the average reflectance was 5.3%.

The above results correspond to the evaluation results of a ghost. The smaller the average reflectance is, the less a ghost is observed.

[Table 6]

| Example/ Comparative Example | Refractive index of lens substrate | Ultraviolet absorber | Yellow dyeing | Luminous transmittance T (%) | Blue light cut ratio (cut ratio according to formulas 1 and 2) (%) | Cut ratio according to formula 3 (%) | Cut ratio according to BS2724 (%) | Luminous reflectance R (%) | Back surface (concave surface) reflection | YI value | Ghost |
|---|---|---|---|---|---|---|---|---|---|---|---|
| Example 1 | 1.6 | Present | 25% | 94.7 | 15.6 | 23.2 | 41.5 | 0.9 | A | 10.9 | A |
| Example 2 | 1.6 | Present | 29% | 94.5 | 21.1 | 27.5 | 44.3 | 0.9 | A | 15.7 | A |
| Example 3 | 1.6 | Present | 25% | 92.7 | 16.1 | 28.1 | 44.7 | 2.2 | B | 16.2 | B |
| Example 4 | 1.6 | Present | 29% | 92.5 | 21.6 | 32.4 | 47.5 | 2.2 | B | 21 | B |
| Example 5 | 1.67 | Present | 26% | 94.2 | 15.3 | 23.6 | 42.3 | 0.9 | A | 10.3 | A |
| Comparative Example 1 | 1.6 | Present | None | 92.9 | 10.9 | 24.2 | 43 | 2.2 | B | 11.5 | B |
| Comparative Example 2 | 1.6 | Present | None | 94.5 | 10.4 | 19.3 | 39.8 | 0.9 | A | 6.2 | A |
| Comparative Example 3 | 1.6 | None | 29% | 98.9 | 12.7 | 13.1 | 30.3 | 0.9 | A | 11.2 | A |

The results illustrated in Table 6 demonstrate that the spectacle lenses of Examples 1 to 5 have larger blue light cut ratios than the spectacle lenses of Comparative Examples 1 to 3, and the present disclosure can provide a spectacle lens having a function of removing blue light.

Note that with reference to the cut ratio (EN) according to formula 3 and the cut ratio according to BS2724, the spectacle lens of Comparative Example 1 appears to have the same cut performance as the spectacle lens of Example 1. However, the spectacle lens of Comparative Example 1 does not actually reduce glare, and does not have sufficient blue light cut performance. Meanwhile, in the present disclosure, evaluation and comparison are performed using the blue light cut ratio according to formulas 1 and 2.

Moreover, in each of Examples 1, 2, and 5, low reflectance antireflective films were formed on both the convex surface and the concave surface, and therefore generation of a ghost could be effectively suppressed. Furthermore, the spectacle lenses of Examples 1 and 5 had low YI values, and therefore also had good appearances.

As described above, the present disclosure can reduce glare caused by blue light. Moreover, the present disclosure can also provide a spectacle lens having a good appearance.

Finally, the present disclosure is summarized.

[1] A spectacle lens according to one aspect includes an ultraviolet absorber, a yellow dye, and a lens substrate including a convex surface and a concave surface facing the convex surface. By inclusion of the ultraviolet absorber and the yellow dye, light of a blue wavelength can be effectively reduced, and a good appearance is obtained.

[2] The spectacle lens according to one embodiment is the lens according to [1], in which the spectacle lens has a luminous transmittance of 90% or more and a blue light cut ratio calculated by the following formulas 1 and 2 of more than 15% and 25% or less, and the convex surface or the concave surface has a luminous reflectance of less than 2.5%. If the transmittance is within the above range, an influence of blue light on the eye can be reduced without imposing a heavy burden on the eye of a wearer.

(Formula 1)

$$T\,(\%) = \frac{\int_{380nm}^{500nm} \tau(\lambda)I\,(\lambda)d\lambda}{\int_{380nm}^{500nm} I(\lambda)d\lambda}$$

(Formula 2)

"Blue light cut ratio" = 100 - T (%)

[3] The spectacle lens according to an embodiment can effectively reduce a ghost by setting the luminous reflectance of at least one surface of the spectacle lens to 1% or less. Furthermore, by setting the luminous reflectance of each of an object side surface and an eyeball side surface of the spectacle lens to 1% or less, a ghost can be further reduced. Moreover, a good appearance can also be obtained.

**Claims**

1. A spectacle lens comprising:

   a lens substrate containing an ultraviolet absorber; and
   an antireflective film formed on at least one of a convex surface of the lens substrate and a concave surface facing the convex surface, wherein
   the lens substrate is dyed with a yellow dye.

2. The spectacle lens according to claim 1, wherein the spectacle lens has a luminous transmittance of 90% or more and a blue light cut ratio calculated by the following formulas 1 and 2 of more than 15% and 25% or less, and the convex surface or the concave surface has a reflectance of less than 2.5%:

(Formula 1)

$$T\,(\%) = \frac{\int_{380nm}^{500nm} \tau(\lambda) I\,(\lambda) d\lambda}{\int_{380nm}^{500nm} I(\lambda) d\lambda}$$

(Formula 2)

"Blue light cut ratio" = 100 - T (%)

(wherein $\lambda$ represents a wavelength of LED light, and $\tau(\lambda)$ represents a transmittance at the wavelength $\lambda$, and $I(\lambda)$ represents an intensity of light at the wavelength $\lambda$).

3. The spectacle lens according to claim 1 or 2, wherein at least one surface of the spectacle lens has a luminous reflectance of 1% or less.

## FIG. 1

REFLECTION SPECTRUM (CONCAVE SURFACE)

EP 3 605 203 A1

# FIG. 2

REFLECTION SPECTRUM (CONCAVE SURFACE)

EXAMPLE 5

EP 3 605 203 A1

## FIG. 3

TRANSMISSION SPECTRUM (ENLARGED)

Legend:
- EXAMPLE 1
- EXAMPLE 2
- EXAMPLE 3
- EXAMPLE 4
- EXAMPLE 5
- COMPARATIVE EXAMPLE 1
- COMPARATIVE EXAMPLE 2
- COMPARATIVE EXAMPLE 3

X-axis: WAVELENGTH (nm)

Y-axis: TRANSMITTANCE (%)

EP 3 605 203 A1

FIG. 4

TRANSMISSION SPECTRUM

EMISSION INTENSITY
OF WHITE LED
(400 TO 500nm)

| WAVELENGTH (nm) | EMISSION INTENSITY |
|---|---|
| 380 | 0.00 |
| 385 | 0.00 |
| 390 | 0.00 |
| 395 | 0.01 |
| 400 | 0.01 |
| 405 | 0.02 |
| 410 | 0.04 |
| 415 | 0.07 |
| 420 | 0.14 |
| 425 | 0.24 |
| 430 | 0.37 |
| 435 | 0.54 |
| 440 | 0.73 |
| 445 | 0.93 |
| 450 | 1.00 |
| 455 | 0.79 |
| 460 | 0.50 |
| 465 | 0.34 |
| 470 | 0.26 |
| 475 | 0.18 |
| 480 | 0.15 |
| 485 | 0.15 |
| 490 | 0.16 |
| 495 | 0.19 |
| 500 | 0.24 |

EMISSION INTENSITY OF WHITE LED (BLUE LIGHT AREA)

EP 3 605 203 A1

## INTERNATIONAL SEARCH REPORT

| International application No. |
| --- |
| PCT/JP2018/013650 |

**A. CLASSIFICATION OF SUBJECT MATTER**
Int.Cl. G02C7/10(2006.01)i, G02B1/115(2015.01)i, G02C7/02(2006.01)i

According to International Patent Classification (IPC) or to both national classification and IPC

**B. FIELDS SEARCHED**

Minimum documentation searched (classification system followed by classification symbols)
Int.Cl. G02C1/00-13/00

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2013-238634 A (ITOH OPTICAL INDUSTRIAL CO., LTD.) 28 November 2013, paragraphs [0016], [0032]-[0098] (Family: none) | 1-3 |
| X | JP 2012-058643 A (TALEX OPTICAL CO., LTD.) 22 March 2012, paragraphs [0014], [0023]-[0057] & US 2013/0194658 A1 (see paragraphs [0018], [0034]-[0073]) & WO 2012/035885 A1 & EP 2618206 A1 & AU 2011303181 A1 & CN 103261949 A | 1-3 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 June 2018 (05.06.2018) | 19 June 2018 (19.06.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/013650

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-054275 A (NIKON-ESSILOR CO., LTD.) 21 March 2013, paragraphs [0004]-[0006], [0035]-[0070] (Family: none) | 1-3 |
| A | JP 2014-199327 A (HOYA CORPORATION) 23 October 2014, paragraphs [0001]-[0007], [0027]-[0043] (Family: none) | 1-3 |
| A | WO 2015/046540 A1 (HOYA LENS THAILAND LTD.) 02 April 2015, paragraphs [0001]-[0004], [0033]-[0034] & US 2016/0215121 A1 (see paragraphs [0001]-[0007], [0067]-[0068]) & EP 3056545 A1 & AU 2014324967 A1 & CN 105612220 A & KR 10-2016-0065845 A | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013008052 A